# EUROPEAN PATENT APPLICATION

(11) **EP 2 852 092 A1**
(43) Date of publication of application: **25.03.2015**
(21) Application number: 13306300.8
(22) Date of filing: 24.09.2013
(51) Int. Cl.: H04L 12/18

(54) **Method and system for videoconferencing**

(71) Applicant: ALCATEL LUCENT, 92100 Boulogne-Billancourt (FR)
(72) Inventor: GUEVEL, Jean-Luc, 29806 BREST (FR); KOENIG, Pascal, 29806 BREST (FR)
(74) Representative: Novagraaf Technologies

(57) **Abstract**

The invention relates to a method for managing videoconference sessions for an end-user (1) comprising the steps of establishing (S₀ to S₂) a first videoconference session between a client device (2a) of said end-user (1) and a first set of participants through a videoconferencing server (3); and generating at said server (3) a first audio stream and a first video stream associated with said first videoconference session. According to the invention, a second videoconference session can be established between the same client device (2a) and a second set of participants through said server (3) for generating a second audio stream and a second video stream associated with said second videoconference session. First and second sessions are bridged at said server (3) so that, upon selection of a main videoconference session among said first and second sessions, first and second video streams are displayed simultaneously on two distinct areas of a graphical user interface (10) of said end-user (1) while only the audio stream associated with the selected main session is played at an audio interface (2b) of said end-user (1).

## Description

### TECHNICAL FIELD

The present invention relates generally to videoconferencing and more particularly to a method, a related server and a related client device for managing multiple videoconferences at an end-user side.

### BACKGROUND

Teleconferencing has long been a way for multiple people to communicate with each other using telephony resources. As computing power has increased, videoconferencing has become a more popular manner for multiple people to meet in a way in which they can hear and see each other.

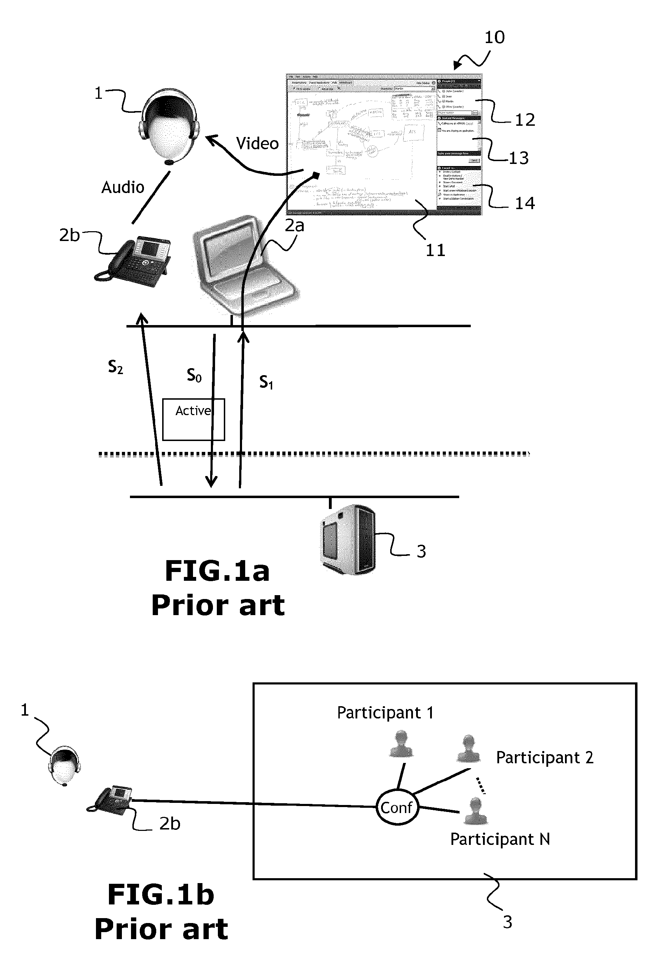

Figures 1a and 1b schematically show a known videoconferencing system enabling an end-user 1 to establish a videoconference session with a set of other participants (Participant 1, Participant 2... Participant N on figure 1b). Typically, videoconferencing communications may require the end-user 1 to connect to a videoconferencing server 3 by using a specific URL and access code which uniquely identify the videoconference session (Step S₀ on figure 1a). This may be made at the end-user side through a client videoconference application running on a client device 2a, such as a Personal Computer, a laptop, a tablet computer or a smart phone. Once the videoconferencing server 3 has accepted the end-user request, the server 3 generates and sends to the client side audio and data sharing associated with the conference. As shown in figures 1a and 1b, video stream may be transmitted to client device 2a (Step S₁) in order to be displayed on a Graphical User Interface 10, while audio stream may be transmitted to a dedicated device 2b of the end-user, such as a desk phone. Alternatively, a single client device with suitable Graphical User Interface and audio interface may be used. In all cases, the Graphical User Interface 10 is configured to display data relating only to the videoconference session such as data shared by all the participants in a first main window 11, the list of the participants in a second window 12, an Instant Messaging tool in a third window 13, and other tools in a fourth window 14 providing other services to the end-user (sharing of documents and/or applications, inviting additional participants by e-mails...)

Conferencing facilities are growing in enterprises. The extended usage of existing tools leads people in enterprises to be invited in several conference calls that may be placed on a same timeslot. It is then up to the attendees to choose the conference call to participate to.

It may occur that such a choice is difficult or even not definitive. For example, one may want to participate to a first conference as an attendee and temporarily switch into another conference to either listen to a specific speaker or make a short presentation. Today, the only possible way of achieving this is, for a user, to step into each conference he is interested in with distinct clients (computers, hardphones, etc.) and to juggle with these clients during the conference. Additionally, in case the conference bridge implements user authentication, it may be required for such a situation to also use distinct accounts.

There is thus a need to propose enhanced videoconferencing solutions that would enable an end-user to easily log into and switch between several simultaneous videoconference sessions.

### SUMMARY OF EXEMPLARY EMBODIMENTS

Some embodiments relate to a method for managing videoconference sessions for an end-user comprising the steps of:
establishing a first videoconference session between a client device of said end-user and a first set of participants through a videoconferencing server; and
generating at said videoconferencing server a first audio stream and a first video stream associated with said first videoconference session,
**characterized in that** said method further comprises:
   establishing a second videoconference session between said client device and a second set of participants through said videoconferencing server and generating at said videoconferencing server a second audio stream and a second video stream associated with said second videoconference session;
   bridging said first videoconference session and said second videoconference session at said videoconferencing server; and
   upon selection of a main videoconference session among said first videoconference session and said second videoconference session:
      displaying simultaneously said first video stream and said second video stream on two distinct areas of a graphical user interface of said end-user;
      playing only the audio stream associated with said selected main videoconference session at an audio interface of said end-user.

Hence, the end-user can follow simultaneously two videoconferences sessions using the same user interfaces and the same videoconferencing server, while paying attention to a selected main videoconference session.

In some embodiments, bridging said first videoconference session and said second videoconference session may comprise transmitting said first and second video streams to said client device but transmitting only the audio stream associated with said selected main videoconference.

In some embodiments, displaying may comprise controlling the sizes of said two distinct areas on said graphical user interface as a function of the selected main videoconference session. The area corresponding to the selected main videoconference session may for instance have a greater size than the area corresponding to the non selected videoconference session.

In some embodiments, displaying may further comprise controlling the displayed content of said two distinct areas on said graphical user interface as a function of the selected main videoconference session.

In some embodiments, selection of a main videoconference may be modified at any time as long as both first and second videoconference sessions are active. The selection of a main videoconference session may be performed at said graphical user interface.

Embodiments of the present invention relate to a videoconferencing server for managing videoconference sessions for an end-user, said server being configured to:
establish a first videoconference session between a client device of said end-user and a first set of participants; and
generate a first audio stream and a first video stream associated with said first videoconference session;
**characterized in that** said server is further configured to:
   establish a second videoconference session between said client device and a second set of participants and generate a second audio stream and a second video stream associated with said second videoconference session;
   bridge said first videoconference session and said second videoconference session; and
   upon selection of a main videoconference session among said first videoconference session and said second videoconference session, transmit said first video stream and said second video stream for display on a graphical user interface of said end-user and at least the audio stream associated with said selected main videoconference session to an audio interface of said end-user.

In some embodiments, the videoconferencing server may be further configured to mute the audio stream associated with the non selected videoconference, so that only the audio stream associated with said selected main videoconference session is transmitted in order to be played by said audio interface.

Embodiments of the present invention further provide a client device for managing videoconference sessions for an end-user through the use of a videoconferencing server, configured to receive from said videoconference server a first video stream associated with a first active videoconference session and to display said first video stream on a graphical user interface, **characterized in that** said client device is further configured to receive from said videoconferencing server a second video stream associated with a second active videoconference session and, upon selection of a main videoconference session among said first videoconference session and said second videoconference session, to display simultaneously said first video stream and said second video stream on two distinct areas of said graphical user interface.

In some embodiments, the client device may be further configured to receive from said videoconferencing server an audio stream associated with said main videoconference session, and to play said audio stream at an audio interface of said end-user.

Alternatively, the client device may be further configured to receive from said videoconferencing server a first audio stream associated with said first videoconference session and a second audio stream associated with said second videoconference session, and to play only the audio stream associated with said selected main videoconference session at an audio interface of said end-user.

In some embodiments, the client device may be further configured to control the sizes of said two distinct areas on said graphical user interface as a function of the selected main videoconference session.

The client device may additionally be configured to control the displayed content of said two distinct areas on said graphical user interface as a function of the selected main videoconference session.

Additional aspects of embodiments will be set forth, in part, in the detailed description, figures and any claims which follow, and in part will be derived from the detailed description. It is to be understood that both the foregoing general description and the following detailed description are only exemplary and do not limit the claimed inventions.

### Brief Description of the Drawings

Some embodiments of apparatus and/or methods will become more fully understood from the detailed description given herein below and the accompanying drawings which are given by way of illustration only and thus are not limiting of the present invention and wherein:
Figures 1a and 1b schematically depict a classical way for an end-user to log into a videoconference session;
Figures 2a and 2b schematically illustrate a videoconferencing system and related method enabling an end-user to log into two videoconference sessions according to some embodiments of the invention;
Figures 3a and 3b schematically show how the videoconferencing system of figures 2a and 2b may react when the end-user switches between the videoconference sessions.

### DETAILED DESCRIPTION

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be rearranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of device A and an input of device B which may be a path including other devices or means. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

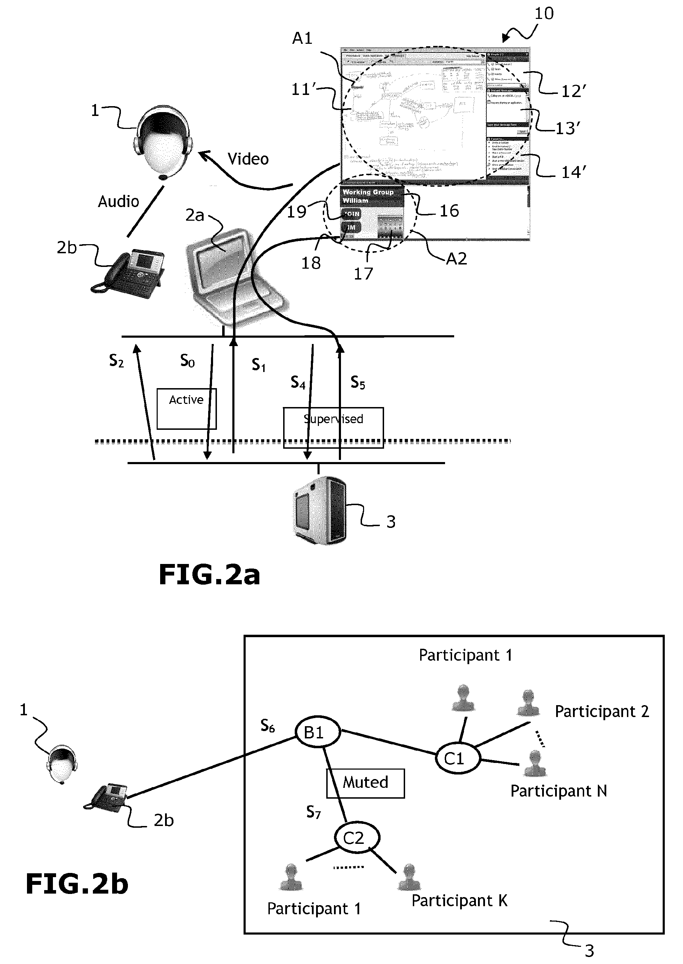

In the following paragraphs, referring to the drawings (Figures 2a to 3a), an implementation of the method and the related devices according to an embodiment will be described.

In order to explain this embodiment, it is assumed that an end-user 1 wants to participate to a first videoconference session C1 and to a second videoconference session C2 using his personal computer 2a or any communication device with a display and on which a videoconferencing client application is running, and his desk phone 2b. It is also assumed that end-user 1 is already informed of the conferences URLs and access codes associated with both sessions C1 and C2, for instance through an e-mail, in order to be able to connect to a videoconferencing server 3 to which personal computer 2a can be coupled.

Similarly to what has been previously explained with reference to figures 1a and 1b, end-user 1 initiates the connection to first conference session C1 (Step S₀ in figure 2a). Once the videoconferencing server 3 has accepted the request, it establishes the first conference session C1 between the client device of end-user 1 and a first set of participants Participant 1, Participant 2... Participant N, already attending the conference. In the exemplary system, this means that server 3 transmits to the client device 2a video stream relating to data sharing for conference C1 (Step S₁). An audio connection between Server 3 and desk phone 2b is also established for the transmission of the audio stream relating to conference C1. This connection can be initiated either by end-user 1, or by server 3 (Step S2).

At this stage of the process, since end-user 1 is connected only to videoconference session C1, client device displays the received video stream on User Graphic Interface 10 which is coupled with or integrated within PC 2a. Referring again to figure 1a, Graphical User Interface may be configured to display data shared by all the participants in a first main window 11, the list of the participants in a second window 12, an Instant Messaging tool in a third window 13, and other tools in a fourth window 14 providing other services to the end-user (sharing of documents and/or applications, inviting additional participants by e-mails...).

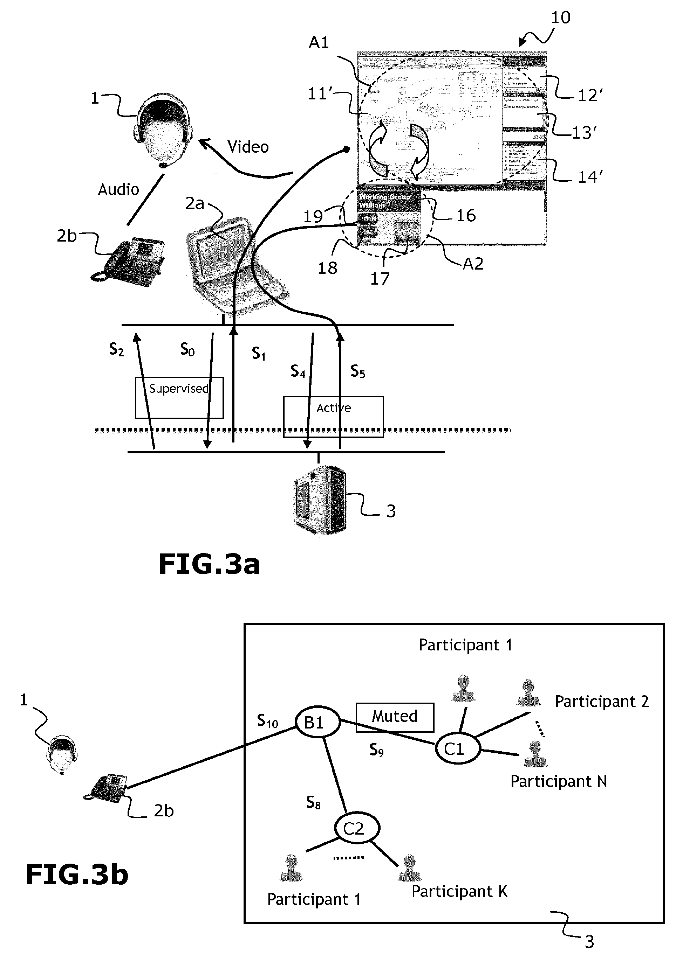

Now, end-user 1 initiates the connection to second conference session C2 (Step S₄ in figure 2a). Once the videoconferencing server 3 has accepted the request, it creates an intermediate bridge (see B1 on figure 3b) for connecting the client device of end-user 1 to both the first set of participants and a second set of participants Participant 1, Participant 2... Participant K, already attending conference C2. In the exemplary system, this means that server 3 transmits also to the client device 2a video stream relating to data sharing for conference C1 (Step S₅).

Both video streams are displayed simultaneously on two distinct areas A1 and A2 of Graphical User interface 10, as shown in dotted lines on figure 2a.

As long as the end-user 1 has not selected conference C2 as being the main conference, videoconference session C2 is active but only in a supervised mode while videoconference session C1 is in a full active mode. In order to help end-user 1 to efficiently attend main video conference session C1, the sizes of areas A1, A2 displayed on GUI 10 may be controlled as a function of the main videoconference session. Preferably, area A1 will have a greater size than area A2 so that end-user 1 will pay most of his attention to videoconference session C1 while keeping an eye on videoconference C2.

Content displayed within each area may also advantageously depend on which session among C1 and C2 has been selected as the main session. By way of example, area A1 of main session C1 will display exactly the same content as described above, i.e. data shared by all the participants in a first main window 11', the list of the participants in a second window 12', an Instant Messaging tool in a third window 13', and other tools in a fourth window 14' providing other services to the end-user (sharing of documents and/or applications, inviting additional participants by e-mails...). Only basic information on session C2 will be displayed within area A2 so that end-user 1 can be kept informed at a glance of the course of the supervised version. Such basic information may comprise the title of conference C2 and the name of the active talker in a first supervised window 16, a sharing preview in a second supervised window 17, an Instant messaging tool in a third supervised window 18. Area A2 also display an interface such as a click button 19 for enabling end-user 1 to easily switch from main session C1 to supervised session C2, as it will be explained hereinafter.

An audio connection between intermediate bridge B1 in server 3 and desk phone 2b is also established for the transmission of the audio stream relating to conference C2 together with the audio stream relating to conference C1 (step S₆ in figure 2b). However, since it is not possible for end-user 1 to follow simultaneously both audio streams, only the audio stream associated with the main conference is played on desk phone 2b. This may be performed, as shown, at the server side, said server 3 being configured to mute the audio stream associated with videoconference session C2 (step S₇ in figure 2b). In this case, only the audio stream of main conference session C1 is transmitted to desk phone 2b.

Alternatively, in some embodiments (not shown) where the videoconference client device would control both the GUI 10 and an audio interface, both audio streams could be transmitted to the client device. In this case, the client device should control the streams so that only the audio stream associated with the main conference is played at the audio interface.

End-user 1 can also add other videoconferences sessions, the limitation being only the size of the screen on which GUI 10 displayed the information concerning the full active session, and the supervised sessions.

At any time as long as the sessions are active (either fully active or supervised), end-user 1 can decide to switch from the main videoconference session to any of the other supervised sessions, e.g. by clicking on the switch button 19 associated with a supervised session. Figures 3a and 3b show the result in clicking on the switch button associated with supervised session C2:
First, second session C2 becomes the main session while first session C1 becomes the supervised session. For the video data, Graphical User Interface 10 is now controlled to invert the content displayed in areas A1 and A2. All windows 11' to 14' in area A1 will now show data relating to session C2 while windows 16, 17, 18 will displayed basic information related to session C1. The audio stream which is played by desk phone 2b must now correspond to the second audio stream. This may be performed, as shown, at the server side, said server 3 being configured to unmute the audio stream associated with videoconference session C2 (step S₈ in figure 3b) and to mute the audio stream associated with videoconference session C1 (step S₉ in figure 3b). Hence, only the audio stream of new selected main conference session C2 is transmitted to desk phone 2b (step S₁₀ in figure 3b).

Alternatively, in those embodiments (not shown) where the videoconference client device would control both the GUI 10 and an audio interface, and both audio streams are transmitted to the client device, the client device should control the streams so that only the audio stream associated with the new selected main conference C2 is played at the audio interface.

Thanks to the embodiments of the invention, an end-user can simultaneously log into several conferences on a same system. In addition, from his conferencing interface, the end-user can seamlessly switch from one conference to another based on any relevant event happening in any of the monitored conferences (e.g. an IM exchange, a specific part of the shared document).

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for managing videoconference sessions for an end-user (1) comprising the steps of:
establishing (S₀ to S₂) a first videoconference session between a client device (2a) of said end-user (1) and a first set of participants through a videoconferencing server (3); and
generating at said videoconferencing server (3) a first audio stream and a first video stream associated with said first videoconference session,
**characterized in that** said method further comprises:
establishing (S₄ to S₅) a second videoconference session between said client device (2a) and a second set of participants through said videoconferencing server (3) and generating at said videoconferencing server (3) a second audio stream and a second video stream associated with said second videoconference session;
bridging said first videoconference session and said second videoconference session at said videoconferencing server (3); and
upon selection of a main videoconference session among said first videoconference session and said second videoconference session:
displaying simultaneously said first video stream and said second video stream on two distinct areas of a graphical user interface (10) of said end-user (1);
playing only the audio stream associated with said selected main videoconference session at an audio interface (2b) of said end-user (1).

2. A method according to claim 1, wherein bridging said first videoconference session and said second videoconference session comprises transmitting said first and second video streams to said client device (2a) but transmitting only the audio stream associated with said selected main videoconference.

3. A method according to anyone of the preceding claims, wherein displaying comprises controlling the sizes of said two distinct areas on said graphical user interface (10) as a function of the selected main videoconference session.

4. A method according to claim 3, wherein displaying further comprises controlling the displayed content of said two distinct areas on said graphical user interface (10) as a function of the selected main videoconference session.

5. A method according to claim 4, wherein the area corresponding to the selected main videoconference session has a greater size than the area corresponding to the non selected videoconference session.

6. A method according to claim 5, wherein the displayed content for the area corresponding to the non selected main videoconference session comprises basic information such as the title of the session, the name of the active talker and shared data.

7. A method according to anyone of the preceding claims, wherein said selection of a main videoconference can be modified at any time as long as both first and second videoconference sessions are active.

8. A method according to anyone of the preceding claims, wherein said selection of a main videoconference session is performed at said graphical user interface (10).

9. A videoconferencing server (3) for managing videoconference sessions for an end-user (1), said server being configured to:
establish a first videoconference session between a client device (2a) of said end-user (1) and a first set of participants; and
generate a first audio stream and a first video stream associated with said first videoconference session;
**characterized in that** said server (3) is further configured to:
establish a second videoconference session between said client device (2a) and a second set of participants and generate a second audio stream and a second video stream associated with said second videoconference session;
bridge said first videoconference session and said second videoconference session; and
upon selection of a main videoconference session among said first videoconference session and said second videoconference session, transmit said first video stream and said second video stream for display on a graphical user interface (10) of said end-user (1) and at least the audio stream associated with said selected main videoconference session to an audio interface (2b) of said end-user (1).

10. The videoconferencing server (3) according to claim 9, further configured to mute the audio stream associated with the non selected videoconference, so that only the audio stream associated with said selected main videoconference session is transmitted in order to be played by said audio interface (2b).

11. A client device (2a) for managing videoconference sessions for an end-user (1) through the use of a videoconferencing server (3), configured to receive from said videoconference server (3) a first video stream associated with a first active videoconference session and to display said first video stream on a graphical user interface (10), **characterized in that** said client device (2a) is further configured to receive from said videoconferencing server (3) a second video stream associated with a second active videoconference session and, upon selection of a main videoconference session among said first videoconference session and said second videoconference session, to display simultaneously said first video stream and said second video stream on two distinct areas of said graphical user interface (10).

12. A client device (2a) according to claim 11, further configured to receive from said videoconferencing server (3) an audio stream associated with said main videoconference session, and to play said audio stream at an audio interface (2b) of said end-user (1).

13. A client device (2a) according to claim 11, further configured to receive from said videoconferencing server (3) a first audio stream associated with said first videoconference session and a second audio stream associated with said second videoconference session, and to play only the audio stream associated with said selected main videoconference session at an audio interface (2b) of said end-user (1).

14. A client device (2a) according to anyone of claims 11 to 13, further configured to control the sizes of said two distinct areas on said graphical user interface (10) as a function of the selected main videoconference session.

15. A client device (2a) according to anyone of claims 11 to 14, further configured to control the displayed content of said two distinct areas on said graphical user interface (10) as a function of the selected main videoconference session.

## Amended claims

### Amended claims in accordance with Rule 137(2) EPC.

1. A method for managing videoconference sessions for an end-user (1) comprising the steps of:
establishing (S₀ to S₂) a first videoconference session between a client device (2a) of said end-user (1) and a first set of participants through a videoconferencing server (3); and
generating at said videoconferencing server (3) a first audio stream and a first video stream associated with said first videoconference session,
**characterized in that** said method further comprises:
establishing (S₄ to S₅) a second videoconference session between said client device (2a) and a second set of participants through said videoconferencing server (3) and generating at said videoconferencing server (3) a second audio stream and a second video stream associated with said second videoconference session;
bridging said first videoconference session and said second videoconference session at said videoconferencing server (3); and
upon selection of a main videoconference session among said first videoconference session and said second videoconference session:
displaying simultaneously said first video stream and said second video stream on two distinct areas of a graphical user interface (10) of said end-user (1);
playing only the audio stream associated with said selected main videoconference session at an audio interface (2b) of said end-user (1).

2. A method according to claim 1, wherein bridging said first videoconference session and said second videoconference session comprises transmitting said first and second video streams to said client device (2a) but transmitting only the audio stream associated with said selected main videoconference.

3. A method according to anyone of the preceding claims, wherein displaying comprises controlling the sizes of said two distinct areas on said graphical user interface (10) as a function of the selected main videoconference session.

4. A method according to claim 3, wherein displaying further comprises controlling the displayed content of said two distinct areas on said graphical user interface (10) as a function of the selected main videoconference session.

5. A method according to claim 4, wherein the area corresponding to the selected main videoconference session has a greater size than the area corresponding to the non selected videoconference session.

6. A method according to claim 5, wherein the displayed content for the area corresponding to the non selected main videoconference session comprises basic information such as the title of the session, the name of the active talker and shared data.

7. A method according to anyone of the preceding claims, wherein said selection of a main videoconference can be modified at any time as long as both first and second videoconference sessions are active.

8. A method according to anyone of the preceding claims, wherein said selection of a main videoconference session is performed at said graphical user interface (10).

9. A videoconferencing server (3) for managing videoconference sessions for an end-user (1), said server being configured to:
establish a first videoconference session between a client device (2a) of said end-user (1) and a first set of participants; and
generate a first audio stream and a first video stream associated with said first videoconference session;
**characterized in that** said server (3) is further configured to:
establish a second videoconference session between said client device (2a) and a second set of participants and generate a second audio stream and a second video stream associated with said second videoconference session;
bridge said first videoconference session and said second videoconference session; and
upon selection of a main videoconference session among said first videoconference session and said second videoconference session, transmit said first video stream and said second video stream for display on a graphical user interface (10) of said end-user (1) and at least the audio stream associated with said selected main videoconference session to an audio interface (2b) of said end-user (1).

10. The videoconferencing server (3) according to claim 9, further configured to mute the audio stream associated with the non selected videoconference, so that only the audio stream associated with said selected main videoconference session is transmitted in order to be played by said audio interface (2b).

11. A client device (2a) for managing videoconference sessions for an end-user (1) through the use of a videoconferencing server (3), configured to receive from said videoconference server (3) a first video stream associated with a first active videoconference session and to display said first video stream on a graphical user interface (10), **characterized in that** said client device (2a) is further configured to receive from said videoconferencing server (3) a second video stream associated with a second active videoconference session and, upon selection of a main videoconference session among said first videoconference session and said second videoconference session, to display simultaneously said first video stream and said second video stream on two distinct areas of said graphical user interface (10),
and **in that** said client device (2a) is further configured to receive from said videoconferencing server (3) at least an audio stream associated with said main videoconference session, and to play said audio stream at an audio interface (2b) of said end-user (1).

12. A client device (2a) according to claim 11, further configured to receive from said videoconferencing server (3) only an audio stream associated with said main videoconference session, and to play said audio stream at an audio interface (2b) of said end-user (1).

13. A client device (2a) according to claim 11, further configured to receive from said videoconferencing server (3) a first audio stream associated with said first videoconference session and a second audio stream associated with said second videoconference session, and to play only the audio stream associated with said selected main videoconference session at an audio interface (2b) of said end-user (1).

14. A client device (2a) according to anyone of claims 11 to 13, further configured to control the sizes of said two distinct areas on said graphical user interface (10) as a function of the selected main videoconference session.

15. A client device (2a) according to anyone of claims 11 to 14, further configured to control the displayed content of said two distinct areas on said graphical user interface (10) as a function of the selected main videoconference session.
